# EUROPÄISCHE PATENTANMELDUNG

(11) **EP 2 559 854 A1**
(43) Veröffentlichungstag der Anmeldung: **20.02.2013**
(21) Anmeldenummer: 11177976.5
(22) Anmeldetag: 18.08.2011
(51) Int. Cl.: F01D 5/18

(54) **Innenkühlbares Bauteil für eine Gasturbine mit zumindest einem Kühlkanal**

(71) Anmelder: Siemens Aktiengesellschaft, 80333 München (DE)
(72) Erfinder: Eifel, Marcel, 45133 Essen (DE); Gloss, Daniel, 45481 Mülheim an der Ruhr (DE); Heselhaus, Andreas, 40235 Düsseldorf (DE); Klumpp, Stephan, 40822 Mettmann (DE); Link, Marco, 47057 Duisburg (DE); Sieber, Uwe, 45476 Mülheim an der Ruhr (DE); Völker, Stefan, 47447 Moers (DE); Wagner, Michael, 46539 Dinslaken (DE)

(57) **Zusammenfassung**

Insgesamt betrifft die Erfindung ein innenkühlbares Bauteil für eine Gasturbine (10) mit zumindest einem Kühlkanal (35), an dessen Innenfläche (42) Verwirbelungselemente (46) in Form von sich quer zur Hauptströmungsrichtung eines Kühlmittels erstreckenden Turbulatoren (46) angeordnet sind. Um für das Kühlmittel (45) Druckverluste im Kühlkanal (35) zu reduzieren ist vorgesehen, dass zwischen den Turbulatoren (46) Pins (48) mit unterschiedlichen Höhen angesiedelt sind.

## Beschreibung

Die Erfindung betrifft ein innenkühlbares Bauteil für eine Gasturbine mit zumindest einem Kühlkanal, an dessen Innenfläche Verwirbelungselemente in Form von sich quer zur Hauptströmungsrichtung eines Kühlmittels erstreckenden Turbulatoren angeordnet sind.

Als innenkühlbare Bauteile der gattungsgemäßen Art sind beispielsweise Turbinenschaufeln von stationären Gasturbinen bekannt, die im Inneren geradlinig oder auch mäanderförmig angeordnete Kühlkanäle aufweisen. An deren Innenflächen sind zumeist sich quer zur Hauptströmungsrichtung eines Kühlmittels, beispielsweise Kühlluft, erstreckende Turbulatoren, auch Kühlrippen genannt, angeordnet. Die Kühlrippen erhöhen den Wärmeübergang aus der Wand in das Kühlmittel, da dadurch das Kühlmittel besser durchmischt wird.

Nachteilig ist dabei, dass die Kühlrippen den Strömungswiderstand erhöhen und zu höheren Druckverlusten führen. Bei zu großen Druckverlusten kann es zum Einzug von Heißgas durch Kühlluftaustrittsöffnungen kommen, durch welche das Kühlmittel eigentlich ausströmen soll. Dies kann zur Zerstörung der Schaufel führen. Daher und auch aus Gründen des Wirkungsgrads sollten die im Kühlkanal auftretenden Druckverluste möglichst klein gehalten werden.

Üblicherweise werden der Kühlkanalquerschnitt sowie die Form, die Größe und die Anordnung und Verteilung der Turbulatoren so aufeinander abgestimmt, dass ein genügender Kühlmitteldruck an den Kühlluftaustrittsöffnungen bereitgestellt werden kann, so dass Heißgaseinzug nicht auftritt.

Dennoch besteht das Bedürfnis, die Druckverluste im Kühlkanal von innen gekühlten Gasturbinen-Bauteilen weiter zu reduzieren. Aufgabe der Erfindung ist daher die Bereitstellung eines Bauteils für eine Gasturbine, welches besonders effizient innen kühlbar ist.

Die der Erfindung zugrundeliegende Aufgabe wird mit einem innenkühlbaren Bauteil gemäß den Merkmalen des Anspruchs 1 gelöst. Vorteilhafte Ausgestaltungen der Erfindung sind in den abhängigen Ansprüchen angegeben, wobei die in den einzelnen Unteransprüchen angegebenen Merkmale in beliebiger Art und Weise miteinander kombiniert werden können.

Erfindungsgemäß ist vorgesehen, dass zwischen den Turbulatoren Pins mit unterschiedlichen Höhen angesiedelt sind. Die Fläche zwischen zwei Kühlrippen ist mit Pins ausgestattet, die einen geringeren Strömungswiderstand als die Kühlrippen darstellen und der Strömung keine Längswirbel aufprägen, sondern nur die Grenzschicht bzw. deren Entwicklung stören und damit die Turbulenz im Kühlmittel steigern. Dadurch ist es möglich, gegenüber den gängigen Abständen zwischen den rippenförmigen Turbulatoren die Abstände zu erhöhen und den Druckverlust zu senken, ohne gleichzeitig die Kühlwirkung zu reduzieren.

Vorzugsweise ist dabei vorgesehen, dass die Höhe der Pins in Hauptströmung graduell anwächst. Vorzugsweise entspricht die Höhe der Pins im Mittel der Grenzschichtdicke. Das graduelle Anwachsen der Höhe orientiert sich dabei an der wachsenden Grenzschichtdicke. Dadurch wird nur die Grenzschicht durchmischt. Eine Durchmischung der im Zentrum des Kühlkanals strömenden Hauptströmung, was in erster Linie nur zu Druckverlusten führen würde, aber nicht zu einer nennenswerten Steigerung des Wärmeübergangs, kann so vermieden werden. Auf diese Weise werden die einhergehenden Druckverluste klein gehalten und der Wärmeübergang maximiert.

Selbstverständlich kann das innenkühlbare Bauteil als Turbinenschaufel, beispielsweise als Turbinenleitschaufel, als Turbinenlaufschaufel oder auch als Führungsringsegment ausgestaltet sein. Führungsringsegmente liegen den Spitzen der Schaufelblätter von Laufschaufeln gegenüber und begrenzen den Heißgaspfad der Gasturbine.

Zweckmäßigerweise sind die rippenförmigen Turbulatoren gegenüber der Hauptströmungsrichtung um einen vorbestimmten Winkel, vorzugsweise 45° geneigt.

Weitere Vorteile und Merkmale der Erfindung werden anhand eines bevorzugten Ausführungsbeispiels in der nachfolgenden Figurenbeschreibung näher beschrieben.

Es zeigen:
- FIG 1: eine Gasturbine in einem Längsteilquerschnitt,
- FIG 2: eine Turbinenschaufel als innenkühlbares Bauteil in einer perspektivischen Darstellung,
- FIG 3: den Längsschnitt durch einen Kühlkanal mit an dessen Innenfläche angeordneten Turbulatoren und Pins,
- FIG 4: den Querschnitt durch aufeinanderfolgende Pins.

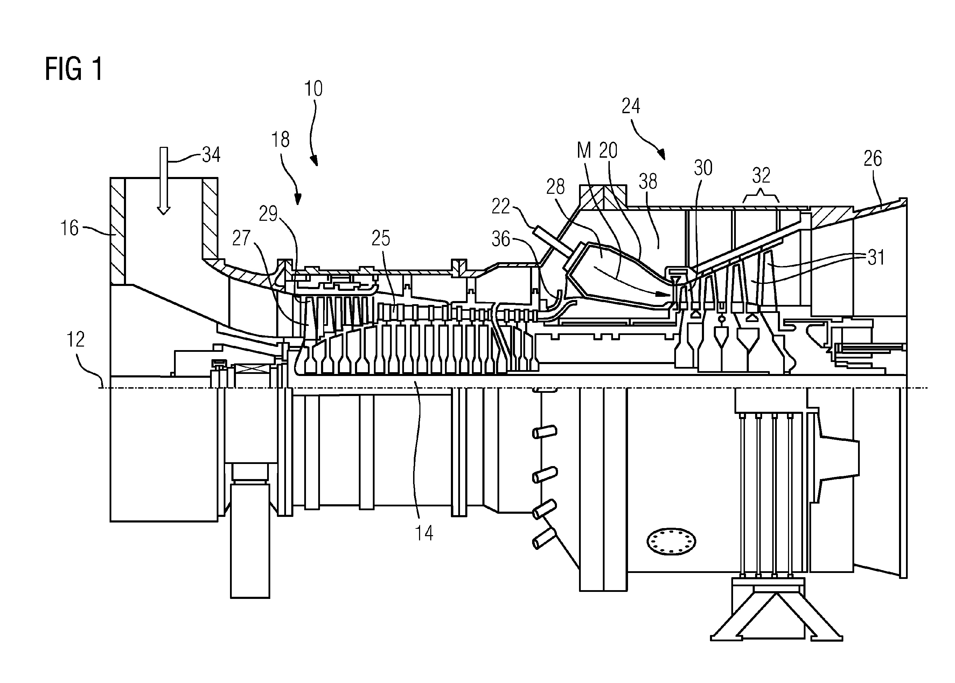

Figur 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Axialturboverdichter 18, eine torusartige Ringbrennkammer 20 mit mehreren rotationssymmetrisch zueinander angeordneten Brennern 22, eine Turbineneinheit 24 und ein Abgasgehäuse 26.

Der Axialturboverdichter 18 umfasst einen ringförmig ausgebildeten Verdichterkanal 25 mit darin kaskadisch aufeinanderfolgenden Verdichterstufen aus Laufschaufel- und Leitschaufelkränzen. Die am Rotor 14 angeordneten Laufschaufeln 27 liegen mit ihren frei endenden Schaufelblattspitzen 29 einer äußeren Kanalwand gegenüber. Der Verdichterkanal 25 mündet über einen Verdichterausgangsdiffusor 36 in einem Plenum 38. Darin ist die Ringbrennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinander geschaltete Turbinenstufen 32 angeordnet. Am Rotor 14 ist ein Generator oder eine Arbeitsmaschine (jeweils nicht dargestellt) angekoppelt.

Im Betrieb der Gasturbine 10 saugt der Axialturboverdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Axialturboverdichters 18 und andererseits zum Antrieb einer Arbeitsmaschine oder elektrischen Generators genutzt.

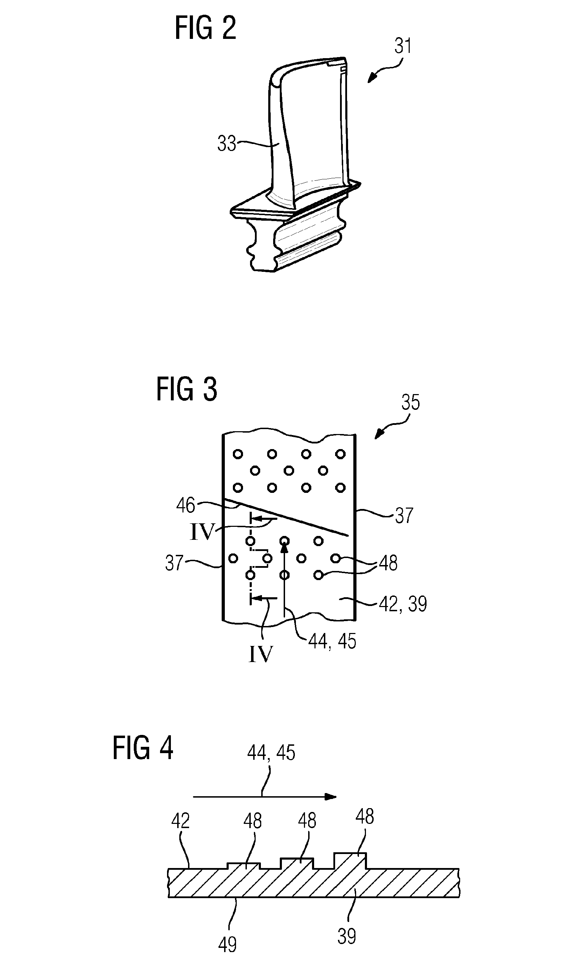

FIG 2 zeigt in perspektivischer Darstellung eine Turbinenschaufel 31 für die weiter oben beschriebene Gasturbine 10. Die Turbinenschaufel 31 ist als innenkühlbares Bauteil ausgestaltet. D.h. im Inneren erstreckt sich, insbesondere durch deren Schaufelblatt 33, ein Kühlkanal 35 (FIG 3).

Ein Längsschnitt durch den Kühlkanal 35 ist schematisch in FIG 3 dargestellt. Der Kühlkanal 35 wird von zwei Seitenwänden 37 seitlich begrenzt. Zwischen diesen erstreckt sich eine dritte Begrenzungswand 39 des Kühlkanals 35. Die Rückseite 49 (FIG 4) der dritten Begrenzungswand 39 ist einer Heißgasströmung ausgesetzt. Auf einer Innenfläche 42 der Begrenzungswand 39 sind in regelmäßigen Abständen sich quer zu einer Hauptströmungsrichtung 44 erstreckende Verwirbelungselemente in Form von rippenförmigen Turbulatoren 46 angesiedelt, von denen lediglich eine dargestellt ist. Die rippenförmigen Turbulatoren werden auch als Kühlrippen bezeichnet. Zwischen den aufeinanderfolgenden Kühlrippen befinden sich jeweils Felder aus sogenannten Pins 48. Jeder Pin 48 ist zylindrisch ausgestaltet. In den Feldern sind die Pins 48 rasterförmig angeordnet, wobei deren Pinhöhe, wie in FIG 4 dargestellt, in Strömungsrichtung 44 zunimmt. Die Pinhöhe ist jedoch geringer als die Höhe der Kühlrippen.

Mit Hilfe dieser Anordnung ist es möglich, dass ein im Kühlkanal 35 strömendes Kühlmittel 45 lediglich nur grenzschichtseitig durchmischt wird und damit der Wärmeübergang erhöht wird. Eine Durchmischung der Hauptströmung - oberhalb der Grenzschicht - kann vermieden werden, was ansonsten zur Erhöhung von Druckverlusten führt. Durch die Verringerung der Druckverluste im Kühlmittel 45 kann der Druck der Kühlmittelversorgung gesenkt werden, was zur Steigerung der Effizienz der Gasturbine 10 beiträgt.

Insgesamt betrifft die Erfindung ein innenkühlbares Bauteil für eine Gasturbine 10 mit zumindest einem Kühlkanal 35, an dessen Innenfläche 42 Verwirbelungselemente 46 in Form von sich quer zur Hauptströmungsrichtung eines Kühlmittels erstreckenden Turbulatoren 46 angeordnet sind. Um für das Kühlmittel 45 Druckverluste im Kühlkanal 35 zu reduzieren ist vorgesehen, dass zwischen den Turbulatoren 46 Pins 48 mit unterschiedlichen Höhen angesiedelt sind.

## Patentansprüche

1. Innenkühlbares Bauteil für eine Gasturbine,
mit zumindest einem Kühlkanal (35), an dessen Innenfläche (42) Verwirbelungselemente (46) in Form von sich quer zur Hauptströmungsrichtung (44) eines Kühlmittels (45) erstreckenden Turbulatoren (46) angeordnet sind,
**dadurch gekennzeichnet,**
**dass** zwischen den Turbulatoren (46) Pins (48) mit unterschiedlichen Höhen angesiedelt sind.

2. Bauteil nach Anspruch 1,
bei dem in Hauptströmungsrichtung (44) des Kühlmittels (45) aufeinander folgende Pins (48) eine zunehmende Höhe aufweisen.

3. Bauteil nach Anspruch 1 oder 2,
bei dem die Turbulatoren (46) gegenüber der Hauptströmungsrichtung (44) um einen vorbestimmten Winkel geneigt angestellt sind.

4. Bauteil nach Anspruch 1, 2 oder 3,
welches als Turbinenschaufel (31) oder als Führungsringsegment ausgestaltet ist.
